# EUROPÄISCHE PATENTSCHRIFT

(11) **EP 3 289 726 B1**
(45) Veröffentlichungstag und Bekanntmachung des Hinweises auf die Patenterteilung: **13.11.2019**
(21) Anmeldenummer: 15721195.4
(22) Anmeldetag: 30.04.2015
(51) Int. Cl.: H04L 12/12, H04L 12/40

(54) **VERFAHREN ZUR ABSICHERUNG VON KONFIGURATIONSDATEN EINES DATENBUS-TRANSCEIVERS, DATENBUS-TRANSCEIVER UND DATENBUSSYSTEM**
METHOD FOR PROTECTING CONFIGURATION DATA FROM A DATA BUS TRANSCEIVER, DATA BUS TRANSCEIVER AND DATA BUS SYSTEM
PROCÉDÉ POUR SÉCURISER DES DONNÉES DE CONFIGURATION D'UN ÉMETTEUR-RÉCEPTEUR DE BUS DE DONNÉES, ÉMETTEUR-RÉCEPTEUR DE BUS DE DONNÉES ET SYSTÈME DE BUS DE DONNÉES

(43) Veröffentlichungstag der Anmeldung: 07.03.2018
(73) Patentinhaber: Continental Teves AG & Co. OHG, 60488 Frankfurt am Main (DE); NXP USA, Inc., Austin TX 78735 (US)
(72) Erfinder: BECKMANN, Tobias, 65760 Eschborn (DE); JANISZEWSKI, Ireneusz, 64367 Mühltal (DE); CORNELIUS, Claas, 30559 Hannover (DE); GACH, Robert, 31600 Seysses (FR); MICHEL, Frank, 61191 Rosbach v. d. Hoehe (DE)
(74) Vertreter: Thiel, Linda
(86) Internationale Anmeldenummer: PCT/EP2015/059610
(87) Internationale Veröffentlichungsnummer: WO 2016/173678

(56) Entgegenhaltungen:
- EP-A1- 1 493 460
- DE-A1- 19 835 258
- DE-B3-102011 081 452

## Beschreibung

Die vorliegende Erfindung betrifft ein Verfahren zur Absicherung von Konfigurationsdaten eines Datenbus-Transceivers gemäß Oberbegriff von Anspruch 1, einen Datenbus-Transceiver gemäß Oberbegriff von Anspruch 8 sowie ein korrespondierendes Datenbussystem für ein Kraftfahrzeug.

Datenbussysteme finden in vielfältigen technischen Bereichen Anwendung. Beispiele hierfür sind die Automobil- und Flugzeugtechnik, wobei insbesondere die Kommunikation von elektronischen Kontrolleinheiten (ECU) unter Verwendung von Bussystemen, wie beispielsweise CAN-Bus (Controller Area Network), realisiert wird.

Datenbus-Transceiver, welche in einem Teilnetzbetrieb (Partial-Networking [PN]) arbeiten können, umfassen einen Dekodierer, mit der die eintreffenden Bus-Nachrichten im Niedrigenergie-Modus mitgelesen und dekodiert werden können. Zur Ausführung des Teilnetzbetriebs müssen diese Transceiver nach dem Anlegen einer Spannung konfiguriert werden. Die Konfiguration kann beispielsweise den Identifikator (ID), welcher den Inhalt einer Nachricht kennzeichnet, eine Identifikator-Maske (IDM), eine Information über die Anzahl der Bytes in Daten (DLC), das Datenfeld inklusive Prüffeld (z.B. CRC-Feld) sowie weitere Konfigurationsbits umfassen und definiert zur Auslösung des Aufweckvorgangs vorgesehene eingehende Nachrichten. Im Niedrigenergiemodus bleiben diese Daten gespeichert, solange die Versorgungsspannung (beispielsweise über KL30B) anliegt. Der Datenbus-Transceiver liest im Niedrigenergiemodus die Nachrichten auf dem Bus mit und vergleicht diese mit der abgespeicherten Konfiguration. Nach einer korrekten Dekodierung werden beispielsweise im Falle von CAN ID, IDM und DLC Datenbits sowie CRC der eingehenden CAN-Nachricht mit den konfigurierten Daten verglichen. Bei einer Übereinstimmung (z.B. nach ISO11898-6) wird ein Aufweckvorgang ausgeführt, durch welchen die dem Transceiver zugeordnete elektronische Kontrolleinheit in den Normalbetriebszustand gesetzt wird. Werden die CAN-Nachrichten nicht korrekt dekodiert, sondern sind aufgrund von Störungen und/oder Manipulationen auf dem Bus oder aufgrund des fehlerhaften Dekoders, z.B. bei verstimmtem Taktgeber des Transceivers, falsch, wird ein Fehlerzähler hochgezählt. Bei Erreichen eines Limits wird ebenso ein Aufweckvorgang ausgeführt.

Durch externe oder interne Störungen, wie beispielsweise alpha-Zerfall, elektromagnetische Störeinflüsse oder Degradierung der Speicherzellen, kann es vorkommen, dass die Konfiguration verändert wird. Mit zunehmender Dauer des Niedrigenergiezustands, steigt die Wahrscheinlichkeit eines auftretenden Fehlers an. Während im Normalbetrieb die Daten ausgelesen und neukonfiguriert werden könnten, ist eine Überprüfung im Niedrigenergiemodus aufgrund von Energieeinsparmaßnahmen häufig nicht möglich. Somit kann die elektronische Kontrolleinheit entweder nicht geweckt werden, obwohl ein zum Aufwecken vorgesehener Datenrahmen eingegangen ist, oder sie wird durch einen nicht dafür vorgesehenen Datenrahmen in fehlerhafter Weise aufgeweckt. Außerdem kann es vorkommen, dass ein Aufwecken der betreffenden elektronischen Kontrolleinheit über den Bus gar nicht mehr möglich ist, weil die fehlerhafte Konfiguration mit keinem der im System verwendeten Nachrichtenkonfiguration mehr übereinstimmt. In Abhängigkeit des betreffenden Systems, welchem die elektronische Kontrolleinheit bzw. der Busteilnehmer zugeordnet ist, kann somit unter Umständen die Verfügbarkeit eines betreffenden Systems reduziert und/oder sicherheitskritische Situationen ausgelöst werden. Diese Fehler sind zudem deshalb problematisch, weil sie nicht signalisiert werden.

Aus der EP 1493460 A1 geht ein System zum Implementieren einer medizinischen Vorrichtung hervor, welche während des Kontakts mit einem Magnetfeld oder Radiofrequenzfeld anfällig für Fehlfunktionen ist. Das System kann in einen Sicherheitsmodusbetrieb versetzt werden, der einige Operationen der Vorrichtung ändert, ohne den gesamten Betrieb einzustellen.

Die DE 102011081452 B3 zeigt ein Verfahren zum Übertragen von Nachrichten in einem Kommunikationsnetz mit mindestens drei Kommunikationsknoten. Mindestens einer der Kommunikationsknoten bleibt immer aktiv und speichert Nachrichten. In einem Ruhemodus des Knotens übernimmt ein weiterer Knoten das Senden der Nachrichten.

Die DE 19835258 A1 offenbart eine integrierte Schaltung mit einer Selbsttestvorrichtung.

Aufgabe der Erfindung ist es daher, ein Mittel bereitzustellen, durch welches eine verbesserte Verfügbarkeit von Datenbusteilnehmern, wie zum Beispiel elektronischen Kontrolleinheiten, die mittels Datenbus kommunizieren, ermöglicht wird. Weiterhin sollen zur Realisierung möglichst geringe Modifikationen erforderlich sein.

Diese Aufgabe wird durch ein Verfahren gemäß Anspruch 1 sowie einen Datenbus-Transceiver gemäß Anspruch 8 und ein Datenbussystem gemäß Anspruch 12 gelöst.

Die Erfindung beschreibt ein Verfahren zur Absicherung von Konfigurationsdaten eines in einem Teilnetzbetrieb betreibbaren Datenbus-Transceivers, wobei die Konfigurationsdaten zum Vergleich mit Daten von über einen Datenbus eingehenden Datenbus-Nachrichten vorgesehen sind, und welches sich dadurch auszeichnet, dass eine Referenz-Prüfsumme der Konfigurationsdaten erzeugt und abgespeichert wird, wobei diese Referenz-Prüfsumme wiederkehrend überprüft wird und im Falle einer erkannten Veränderung ein Aufwecksignal und/oder eine Fehlerinformation ausgegeben wird.

Damit wird in vorteilhafter Weise eine verbesserte Verfügbarkeit von Busteilnehmern eines Datenbusses ermöglicht, indem beispielsweise durch externe und/oder interne Störungen verursachte Veränderungen von Konfigurationsdaten erkannt werden können, wodurch das Risiko, dass der betreffende Busteilnehmer über den Bus nicht mehr geweckt werden kann, verringert wird. Das fehlerhafte Aufwecken durch nicht dafür vorgesehene Bus-Nachrichten, in Folge einer Änderung von Konfigurationsdaten, welche einer vorhandenen Datenrahmenkonfiguration entsprechen, kann sofort erkannt werden und behandelt werden. Die Ausgabe des Aufwecksignals ermöglicht zudem weiterführende Fehlerbehandlungen, wobei die ausgegebenen Fehlerinformationen durch das Aufwecksignal mit umfasst sein können. Die zur Realisierung der Erfindung notwendigen Modifikationen an bestehenden Systemen können als vergleichsweise gering angesehen werden. Sicherheitskritische Situationen können durch die Erfindung in vorteilhafter Weise verringert sowie die Systemverfügbarkeit erhöht werden.

Entsprechend einer bevorzugten Ausführungsform der Erfindung wird zur Überprüfung der abgespeicherten Referenz-Prüfsumme und/oder Konfigurationsdaten erneut eine Prüfsumme der Konfigurationsdaten erzeugt und mit der abgespeicherten Prüfsumme verglichen. Die erneute Erzeugung einer Prüfsumme der Konfigurationsdaten erfolgt bevorzugt wiederkehrend. Somit ist es möglich, auch über einen längeren Zeitraum eine wiederholte Überprüfung der Konfigurationsdaten bzw. gespeicherten Prüfsumme vorzunehmen, wodurch insbesondere Fehler behandelbar sind, dessen Wahrscheinlichkeit mit Länge des Zeitraums zunimmt.

Besonders bevorzugt wird die erneute Erzeugung einer Prüfsumme der Konfigurationsdaten durch eine eingehende Datenbus-Nachricht und/oder entsprechend zeitlicher Vorgaben - insbesondere zyklisch - ausgelöst.

Zweckmäßigerweise werden das Aufwecksignal und/oder die Fehlerinformation an zumindest eine dem Datenbus-Transceiver zugeordnete elektronische Kontrolleinheit ausgegeben. Dies verbessert eine nachfolgende Fehlerbehandlung durch die zugeordnete elektronische Kontrolleinheit. Es können notwendige Maßnahmen, wie beispielsweise Mitteilung des Fehlers an einen Insassen eines Kraftfahrzeugs und/oder selbständige Behebung des Fehlers, ergriffen werden.
Gemäß einer vorteilhaften Weiterbildung der Erfindung erfolgt die Überprüfung der Referenz-Prüfsumme in einem Niedrigenergiemodus des Datenbus-Transceivers und/oder einer dem Datenbus-Transceiver zugeordneten elektronischen Kontrolleinheit. Als Vorteil wird damit die Wahrscheinlichkeit verringert, dass, trotz Energieeinsparmaßnahmen im Niedrigenergiemodus, die betreffende elektronische Kontrolleinheit über den Datenbus nicht mehr geweckt werden kann.

Die Referenz-Prüfsumme wird vorzugsweise während oder nach einem Speichern der Konfigurationsdaten oder direkt vor einem Übergang in einen Niedrigenergiemodus des Datenbus-Transceivers oder einer dem Datenbus-Transceiver zugeordneten elektronischen Kontrolleinheit erzeugt. Eine Wahrscheinlichkeit von Änderungen in Folge von internen und/oder externen Störungen in einem Zeitraum zwischen dem Abspeichern der Prüfsumme und dem Übergang in einen Niedrigenergiemodus wird somit möglichst gering gehalten, da der Zeitraum bis zum Beginn der Überprüfung im Niedrigenergiemodus vergleichsweise kurz ist, was insbesondere im Falle einer Ausführung der Überprüfung lediglich im Niedrigenergiemodus vorteilhaft ist. Ein Schreiben bzw. Speichern der Konfigurationsdaten erfolgt zweckmäßigerweise mittels eines Datenbusses, wie z.B. eines seriellen Datenbusses, insbesondere ein Serielles-Peripherie-Interface.

Weiterhin betrifft die Erfindung einen Datenbus-Transceiver umfassend Speichermittel zum Speichern von Konfigurationsdaten, welche zum Vergleich mit Daten von über einen Datenbus eingehenden Datenbus-Nachrichten vorgesehen sind, wobei der Datenbus-Transceiver derart ausgebildet ist, dass mittels einer Prüfsummeneinrichtung eine Referenz-Prüfsumme der Konfigurationsdaten erzeugbar und in einem Speichermittel zum Speichern der Referenz-Prüfsumme abspeicherbar ist, um diese Referenz-Prüfsumme in wenigstens einem Betriebszustand des Datenbus-Transceiver wiederkehrend zu überprüfen und im Falle einer erkannten Veränderung ein Aufwecksignal und/oder eine Fehlerinformation auszugegeben.

Der erfindungsgemäße Datenbus-Transceiver ist vorzugsweise in der Weise ausgestaltet, dass zur Überprüfung der abgespeicherten Referenz-Prüfsumme und/oder Konfigurationsdaten, mittels Prüfsummeneinrichtung wenigstens eine erneute Prüfsumme der Konfigurationsdaten erzeugbar und mittels einer Vergleichseinheit mit der abgespeicherten Referenz-Prüfsumme vergleichbar ist.

Der Datenbus-Transceiver weist entsprechend einer Weiterbildung einen Niedrigenergiemodus mit zumindest zwei Betriebszuständen unterschiedlicher Energieaufnahme auf, wobei in einem dieser Betriebszustände die Überprüfung der Referenz-Prüfsumme durchführbar ist. Dies ermöglicht eine zusätzliche Abstufung hinsichtlich der Energieaufnahme des Datenbus-Transceivers im Rahmen des Niedrigenergiemodus.

Der erfindungsgemäße Datenbus-Transceiver ist bevorzugt in der Weise ausgestaltet, dass das erfindungsgemäße Verfahren ausführbar ist.

Datenbussystem für ein Kraftfahrzeug umfassend eine Mehrzahl an Datenbusteilnehmern und wenigstens einen Datenbus zum Austausch von Datenbus-Nachrichten zwischen den Datenbusteilnehmern, wobei das Datenbussystem zumindest einen Datenbus-Transceiver gemäß der Erfindung umfasst.

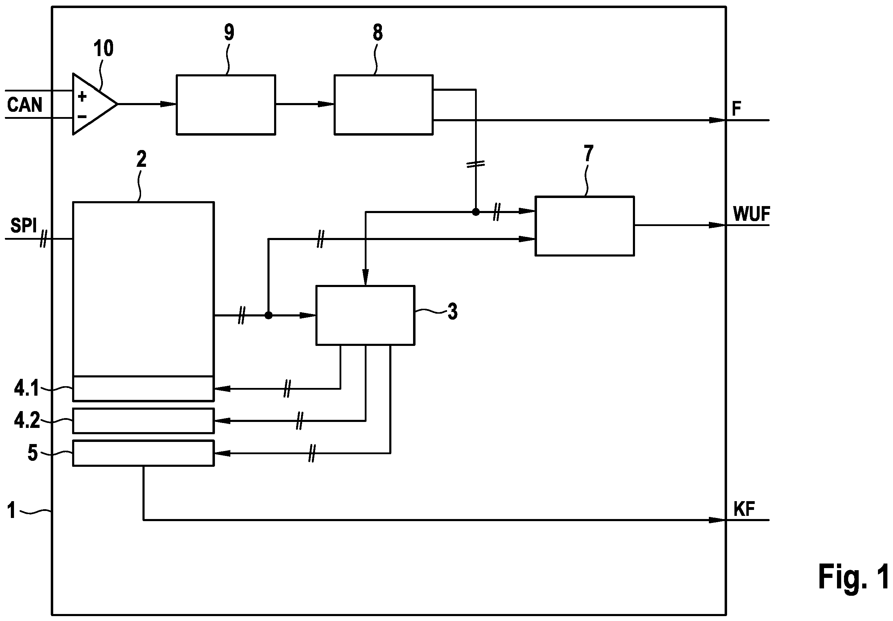

Weitere bevorzugte Ausführungsformen ergeben sich aus der nachfolgenden Beschreibung eines Ausführungsbeispiels an Hand von Figur 1.

In Prinzipdarstellung zeigt:
- Fig. 1: eine Darstellung einer erfindungsgemäßen Ausführungsform eines CAN-Transceivers 1.

Die Fig. 1 zeigt eine schematische Darstellung eines Ausführungsbeispiels eines PN-CAN-Transceivers 1 entsprechend der Erfindung, wobei lediglich für die Beschreibung der Erfindung wesentliche Elemente dargestellt sind. Über Datenbus CAN eingehende CAN-Differenzsignale werden in an sich bekannter Weise unter Verwendung von Komparator 10 in eine Bitfolge umgeformt, einem Sampling 9 unterzogen und mittels Dekodierer 8 dekodiert. Die dekodierte CAN-Nachricht wird anschließend mit in Konfigurationsregister 2 hinterlegten Daten verglichen. Bei einer Übereinstimmung wird ein entsprechendes Aufwecksignal WUF an eine zugeordnete elektronische Kontrolleinheit ausgegeben. Die in Konfigurationsregister 2 hinterlegten Daten definieren unter welchen Bedingungen bzw. bei Eingang welcher CAN-Nachrichten der Transceiver 1 eine diesem zugeordnete elektronische Kontrolleinheit aktiviert. Im Falle der Erkennung eines Fehlers bei der Dekodierung bzw. Erreichen eines Limits eines Fehlerzählers erfolgt die Ausgabe eines diesen Fehler anzeigenden Aufwecksignals F an die elektronische Kontrolleinheit.

Während oder nach dem Schreiben der Konfigurationsdaten in Konfigurationsregister 2 über Datenbus SPI oder direkt vor dem Übergang in den Niedrigenergiemodus der elektronischen Kontrolleinheit wird mittels Prüfsummeneinheit 3 eine Prüfsumme gebildet, welche in Referenz-Prüfsummenregister 4.1 gespeichert wird. Bei der Prüfsumme handelt es sich beispielsweise um eine CRC-Kodierung (Zyklische Redundanzprüfung), ECC-Kodierung ("Error-Correcting-Code"), Parität oder ein oder mehrere andere Verfahren zur Fehlerabsicherung. Die Wahl des Verfahrens kann insbesondere davon abhängig gemacht werden, wie gut die Fehlerdetektion sein soll und wie hoch der Stromverbrauch für die Ausführung im Niedrigenergiemodus und der Umfang der für diesen Zweck vorzusehenden Hard- und/oder Softwareressourcen sein darf. Bei einem CRC können z.B. sequentielle oder parallele Verfahren gewählt werden. Dabei wird bevorzugt eine Zeitdauer berücksichtigt, bis der sequentiell ausgerechnete CRC-Wert gültig ist. Prüfsummeneinheit 3 und/oder weitere der die Erfindung betreffenden funktionellen Baugruppen können bevorzugt als Hardware oder Software oder einer Kombination aus Hardware und Software implementiert sein.

Im Niedrigenergiemodus der elektronischen Kontrolleinheit wird wiederholt die Prüfsumme der Konfiguration neu berechnet und mit der in Referenz-Prüfsummenregister 4.1 gespeicherten Prüfsumme verglichen. Prüfsummeneinheit 3 speichert den neu berechneten Prüfsummenwert in Prüfsummenregister 4.2, woraufhin Vergleichseinheit 5 einen Vergleich der in Referenz-Prüfsummenregister 4.1 hinterlegten Daten mit der in Referenz-Prüfsummenregister 4.2 hinterlegten neu berechneten Prüfsumme vornimmt. Stimmt die neu berechnete Prüfsumme mit der gespeicherten Prüfsumme nicht überein, so wird mittels Vergleichseinheit 5 ein Aufweckvorgang aufgrund eines Konfigurationsfehlers KF ausgelöst und ein entsprechender Statusindikator (Flag) gesetzt. Die unterschiedlichen Fehlersignale F, KF und/oder WUF können insbesondere innerhalb des Funktionsumfangs von Transceiver 1 weiter logisch, z.B. disjunkt, verknüpft werden. Durch das Setzen des Statusindikators lässt sich die Ursache für den Aufweckvorgang anschließend durch die zugeordnete elektronische Kontrolleinheit feststellen. Die elektronische Kontrolleinheit hat nach dem Starten unterschiedlichste Möglichkeiten der Fehlerbehandlung, beispielsweise kann die Konfiguration neu geschrieben und/oder Rückfallmodi für das wiederholte fehlerhafte Aufwecken aktiviert werden.

Der Beginn einer Überprüfung kann durch interne und/oder externe Auslöser verursacht werden. Als interner Auslöser kann beispielsweise eine zeitliche Vorgabe erfolgen und als externe Auslöser eintreffende CAN-Nachrichten, da diese ohnehin eine notwendige Bedingung für das Aufwecken darstellen. Entsprechend ist in Fig. 1 ein Signalpfad von Dekodierer 8 zu Prüfsummeneinheit 3 vorgesehen. Auch das Vorliegen einer Kombination aus wenigstens einem internen und zumindest einem externen Auslöser ist realisierbar.

Im Niedrigenergiemodus der elektronischen Kontrolleinheit können zweckmäßigerweise neben einem normalen Betriebsmodus, in welchem der Transceiver 1 und/oder eine diesem zugeordnete elektronische Kontrolleinheit bzw. der entsprechende Busteilnehmer, dem die elektronische Kontrolleinheit sowie der Transceiver und Buscontroller zugeordnet sind, sich nicht in einem Niedrigenergiemodus befindet und/oder sich zumindest teilweise in einem gebrauchsgemäßen aktivierten Zustand befindet, auch unterschiedliche Energiemodi von Transceiver 1 umgesetzt sein. Es kann zum Beispiel ein Betriebszustand vorgesehen sein, in welchem Dekodierer 8 abgeschaltet sowie ein weiterer Betriebszustand, in dem eine erhöhte Stromaufnahme zugelassen ist, wobei Dekodierer 8 aktiviert ist und der Prüfsummenvergleich ausgeführt wird.

## Patentansprüche

1. Verfahren zur Absicherung von Konfigurationsdaten eines in einem Teilnetzbetrieb betreibbaren Datenbus-Transceivers (1), wobei die Konfigurationsdaten zum Vergleich mit Daten von über einen Datenbus, CAN, eingehenden Datenbus-Nachrichten vorgesehen sind, **dadurch gekennzeichnet, dass** eine Referenz-Prüfsumme der Konfigurationsdaten erzeugt und abgespeichert wird, wobei diese Referenz-Prüfsumme wiederkehrend überprüft wird und im Falle einer erkannten Veränderung ein Aufwecksignal und/oder eine Fehlerinformation ausgegeben wird.

2. Verfahren gemäß Anspruch 1, **dadurch gekennzeichnet, dass** zur Überprüfung der abgespeicherten Referenz-Prüfsumme und/oder Konfigurationsdaten erneut eine Prüfsumme der Konfigurationsdaten erzeugt und mit der abgespeicherten Referenz-Prüfsumme verglichen wird.

3. Verfahren gemäß Anspruch 2, **dadurch gekennzeichnet, dass** die erneute Erzeugung einer Prüfsumme der Konfigurationsdaten wiederkehrend erfolgt.

4. Verfahren gemäß Anspruch 2 oder 3, **dadurch gekennzeichnet, dass** die erneute Erzeugung einer Prüfsumme der Konfigurationsdaten durch eine eingehende Datenbus-Nachricht und/oder entsprechend zeitlicher Vorgaben - insbesondere zyklisch - ausgelöst wird.

5. Verfahren gemäß einem der vorhergehenden Ansprüche, **dadurch gekennzeichnet, dass** das Aufwecksignal und/oder die Fehlerinformation an zumindest eine dem Datenbus-Transceiver zugeordnete elektronische Kontrolleinheit ausgegeben werden.

6. Verfahren gemäß einem der vorhergehenden Ansprüche, **dadurch gekennzeichnet, dass** die Überprüfung der Referenz-Prüfsumme in einem Niedrigenergiemodus des Datenbus-Transceivers (1) und/oder einer dem Datenbus-Transceiver (1) zugeordneten elektronischen Kontrolleinheit erfolgt.

7. Verfahren gemäß einem der vorhergehenden Ansprüche, **dadurch gekennzeichnet, dass** die Referenz-Prüfsumme während oder nach einem Speichern der Konfigurationsdaten oder direkt vor einem Übergang in einen Niedrigenergiemodus des Datenbus-Transceivers (1) oder einer dem Datenbus-Transceiver (1) zugeordneten elektronischen Kontrolleinheit erzeugt wird.

8. Datenbus-Transceiver (1) umfassend Speichermittel (2) zum Speichern von Konfigurationsdaten, welche zum Vergleich mit Daten von über einen Datenbus, CAN, eingehenden Datenbus-Nachrichten vorgesehen sind, **dadurch gekennzeichnet, dass** der Datenbus-Transceiver (1) derart ausgebildet ist, dass mittels einer Prüfsummeneinrichtung (3) eine Referenz-Prüfsumme der Konfigurationsdaten erzeugbar und in einem Speichermittel (4.1) zum Speichern der Referenz-Prüfsumme abspeicherbar ist, um diese Referenz-Prüfsumme in wenigstens einem Betriebszustand des Datenbus-Transceiver (1) wiederkehrend zu überprüfen und im Falle einer erkannten Veränderung ein Aufwecksignal und/oder eine Fehlerinformation auszugegeben.

9. Datenbus-Transceiver (1) gemäß Anspruch 8, **dadurch gekennzeichnet, dass** zur Überprüfung der abgespeicherten Referenz-Prüfsumme und/oder Konfigurationsdaten, mittels Prüfsummeneinrichtung (3) wenigstens eine erneute Prüfsumme der Konfigurationsdaten erzeugbar und mittels einer Vergleichseinheit (5) mit der abgespeicherten Referenz-Prüfsumme vergleichbar ist.

10. Datenbus-Transceiver (1) gemäß Anspruch 8 oder 9, **dadurch gekennzeichnet, dass** dieser einen Niedrigenergiemodus mit zumindest zwei Betriebszuständen unterschiedlicher Energieaufnahme aufweist, wobei in einem dieser Betriebszustände die Überprüfung der Referenz-Prüfsumme durchführbar ist.

11. Datenbus-Transceiver (1) gemäß wenigstens einem der Ansprüche 8 bis 10, **dadurch gekennzeichnet, dass** dieser ausgestaltet ist, dass ein Verfahren nach einem der Ansprüche 1 bis 7 ausführbar ist.

12. Datenbussystem für ein Kraftfahrzeug umfassend eine Mehrzahl an Datenbusteilnehmern und wenigstens einen Datenbus, CAN, zum Austausch von Datenbus-Nachrichten zwischen den Datenbusteilnehmern, **dadurch gekennzeichnet, dass** das Datenbussystem zumindest einen Datenbus-Transceiver (1) gemäß wenigstens einem der Ansprüche 8 bis 11 umfasst.

## Claims

1. Method for protecting configuration data of a data bus transceiver (1) which is operable in partial networking, wherein the configuration data are provided for comparison with data of data bus messages incoming via a data bus, CAN, **characterized in that** a reference checksum of the configuration data is generated and stored, wherein this reference checksum is checked recursively, and in the case of a detected change, a wake-up signal and/or a piece of error information is output.

2. Method according to Claim 1, **characterized in that** for checking the stored reference checksum and/or configuration data, a checksum of the configuration data is regenerated and compared to the stored reference checksum.

3. Method according to Claim 2, **characterized in that** the regeneration of a checksum of the configuration data takes place recursively.

4. Method according to Claim 2 or 3, **characterized in that** the regeneration of a checksum of the configuration data is triggered, in particular cyclically, via an incoming data bus message and/or according to temporal specifications.

5. Method according to one of the preceding claims, **characterized in that** the wake-up signal and/or the piece of error information are output to at least one electronic control unit which is associated with the data bus transceiver.

6. Method according to one of the preceding claims, **characterized in that** the check of the reference checksum takes place in a low-power mode of the data bus transceiver (1) and/or an electronic control unit which is associated with the data bus transceiver (1).

7. Method according to one of the preceding claims, **characterized in that** the reference checksum is generated during or after storage of the configuration data or directly before transition to a low-power mode of the data bus transceiver (1) or an electronic control unit which is associated with the data bus transceiver (1).

8. Data bus transceiver (1) comprising storage means (2) for storing configuration data which are provided for comparison with data of data bus messages incoming via a data bus, CAN, **characterized in that** the data bus transceiver (1) is designed in such a way that, by means of a checksum device (3), a reference checksum of the configuration data may be generated and may be stored in a storage means (4.1) for storing the reference checksum, in order to recursively check this reference checksum in at least one operating state of the data bus transceiver (1), and in the case of a detected change, to output a wake-up signal and/or a piece of error information.

9. Data bus transceiver (1) according to Claim 8, **characterized in that** for checking the stored reference checksum and/or configuration data, at least one renewed checksum of the configuration data may be generated by means of checksum device (3) and may be compared to the stored reference checksum by means of a comparison unit (5) .

10. Data bus transceiver (1) according to Claim 8 or 9, **characterized in that** said data bus transceiver has a low-power mode with at least two operating states having different power consumption, wherein the check of the reference checksum may be carried out in one of these operating states.

11. Data bus transceiver (1) according to at least one of Claims 8 to 10, **characterized in that** said data bus transceiver is designed so that a method according to one of Claims 1 to 7 may be carried out.

12. Data bus system for a motor vehicle, comprising a plurality of data bus users and at least one data bus, CAN, for exchanging data bus messages between data bus users, **characterized in that** the data bus system comprises at least one data bus transceiver (1) according to at least one of Claims 8 to 11.

## Revendications

1. Procédé de protection de données de configuration d'un émetteur-récepteur de bus de données (1) pouvant être utilisé en fonctionnement de réseau partiel, les données de configuration étant prévues pour être comparées à des données provenant de messages de bus de données entrant via un bus de données, CAN, **caractérisé en ce qu'**une somme de vérification de référence des données de configuration est effectuée et mémorisée, cette somme de vérification de référence étant vérifiée de façon répétitive et un signal de sortie de veille et/ou une information d'anomalie étant envoyés en cas de changement détecté.

2. Procédé selon la revendication 1, **caractérisé en ce que** pour la vérification de la somme de vérification de référence mémorisée et/ou des données de configuration, une somme de vérification des données de configuration est à nouveau effectuée et comparée à la somme de vérification de référence mémorisée.

3. Procédé selon la revendication 2, **caractérisé en ce que** la nouvelle production d'une somme de vérification des données de configuration se produit de façon répétitive.

4. Procédé selon la revendication 2 ou 3, **caractérisé en ce que** la nouvelle production d'une somme de vérification des données de configuration est déclenchée par un message de bus de données entrant et/ou en fonction d'objectifs dans le temps - notamment cycliquement.

5. Procédé selon l'une quelconque des revendications précédentes, **caractérisé en ce que** le signal de sortie de veille et/ou l'information d'anomalie sont envoyés à au moins une unité de contrôle électronique associée à l'émetteur-récepteur de bus de données.

6. Procédé selon l'une quelconque des revendications précédentes, **caractérisé en ce que** la vérification de la somme de vérification de référence se produit dans un mode de basse énergie de l'émetteur-récepteur de bus de données (1) et/ou d'une unité de contrôle électronique associée à l'émetteur-récepteur de bus de données (1).

7. Procédé selon l'une quelconque des revendications précédentes, **caractérisé en ce que** la somme de vérification de référence est effectuée pendant ou après une mémorisation des données de configuration ou directement avant une transition vers un mode de basse énergie de l'émetteur-récepteur de bus de données (1) ou d'une unité de contrôle électronique associée à l'émetteur-récepteur de bus de données (1).

8. Émetteur-récepteur de bus de données (1) comprenant des moyens de mémorisation (2) permettant de mémoriser des données de configuration prévues pour être comparées à des données provenant de messages de bus de données entrant via un bus de données, CAN, **caractérisé en ce que** l'émetteur-récepteur de bus de données (1) est réalisé de telle sorte qu'une somme de vérification de référence des données de configuration peut être effectuée au moyen d'un dispositif de réalisation de sommes de vérification (3) et mémorisée dans un moyen de mémorisation (4.1) permettant de mémoriser la somme de vérification de référence, pour vérifier de façon répétitive cette somme de vérification de référence dans au moins un état de fonctionnement de l'émetteur-récepteur de bus de données (1) et envoyer un signal de sortie de veille et/ou une information d'anomalie en cas de changement détecté.

9. Émetteur-récepteur de bus de données (1) selon la revendication 8, **caractérisé en ce que** pour la vérification de la somme de vérification de référence mémorisée et/ou des données de configuration, au moins une nouvelle somme de vérification des données de configuration peut être effectuée à l'aide du dispositif de réalisation de sommes de vérification (3) et être comparée à la somme de vérification de référence mémorisée à l'aide d'une unité de comparaison (5).

10. Émetteur-récepteur de bus de données (1) selon la revendication 8 ou 9, **caractérisé en ce que** celui-ci comporte un mode de basse énergie avec au moins deux états de fonctionnement de réception d'énergie différente, la vérification de la somme de vérification de référence pouvant être effectuée dans un de ces états de fonctionnement.

11. Émetteur-récepteur de bus de données (1) selon au moins l'une quelconque des revendications 8 à 10, **caractérisé en ce que** celui-ci est configuré et qu'un procédé selon l'une quelconque des revendications 1 à 7 peut être mis en œuvre.

12. Système de bus de données pour un véhicule automobile comprenant une pluralité de participants au bus de données et au moins un bus de données, CAN, permettant d'échanger des messages de bus de données entre les participants au bus de données, **caractérisé en ce que** le système de bus de données comprend au moins un émetteur-récepteur de bus de données (1) selon au moins l'une quelconque des revendications 8 à 11.
